# EUROPÄISCHE PATENTSCHRIFT

(11) **EP 2 452 101 B1**
(45) Veröffentlichungstag und Bekanntmachung des Hinweises auf die Patenterteilung: **21.08.2013**
(21) Anmeldenummer: 10730785.2
(22) Anmeldetag: 07.07.2010
(51) Int. Cl.: F16H 61/18, F16H 63/34

(54) **SCHALTVORRICHTUNG EINES KRAFTFAHRZEUG-SCHALTGETRIEBES**
SHIFTING DEVICE OF A MOTOR VEHICLE MANUAL TRANSMISSION
DISPOSITIF DE CHANGEMENT DE VITESSE D'UNE BOITE DE VITESSES DE VEHICULE A MOTEUR

(30) Priorität: 08.07.2009 DE 102009027533
(43) Veröffentlichungstag der Anmeldung: 16.05.2012
(73) Patentinhaber: ZF Friedrichshafen AG, 88038 Friedrichshafen (DE)
(72) Erfinder: RETSCH, Matthias, 14776 Brandenburg (DE)
(74) Vertreter: Paul, Andreas
(86) Internationale Anmeldenummer: PCT/EP2010/059742
(87) Internationale Veröffentlichungsnummer: WO 2011/003946

(56) Entgegenhaltungen:
- EP-A1- 0 247 976
- EP-A2- 2 023 022
- DE-A1- 10 232 530
- DE-A1- 19 729 767

## Beschreibung

Die Erfindung betrifft eine Schaltvorrichtung eines Kraftfahrzeug-Schaltgetriebes, das mindestens achsparallele, selektiv über mehrere Gangradsätze unterschiedlicher Übersetzung miteinander in Triebverbindung bringbare Getriebewellen aufweist, mit einer Schaltwelle, die zur Übertragung von Wählvorgängen axial verschiebbar und zur Übertragung von Schaltvorgängen um ihre Längsachse drehbar gelagert im Getriebegehäuse angeordnet ist, und mit einer formschlüssig wirksamen Wählsperre zur betriebsabhängigen Verhinderung einer Axialverschiebung der Schaltwelle in eine äußere Schaltgasse.

Mehrstufige Schaltgetriebe für Kraftfahrzeuge sind mit Ausnahme von Planeten-Automatgetrieben und Doppelkupplungsgetrieben üblicherweise als einfache Vorgelegegetriebe mit zwei achsparallelen Getriebewellen ausgebildet, die selektiv über mehrere Gangradsätze unterschiedlicher Übersetzung miteinander in Triebverbindung bringbar sind. Die Gangradsätze weisen jeweils mindestens ein auf einer der beiden Getriebewellen drehfest angeordnetes Festrad und ein auf der anderen Getriebewelle drehbar gelagertes Losrad auf. Bei den Vorwärtsgängen steht das jeweilige Losrad unmittelbar mit dem zugeordneten Festrad in Verzahnungseingriff und ist mittels einer zugeordneten Gangkupplung mit der betreffenden Getriebewelle drehfest verbindbar. Bei dem Rückwärtsgang steht das Losrad zur Drehrichtungsumkehr über ein Zwischenrad mit dem zugeordneten Festrad in Triebverbindung. Durch das Schließen der jeweiligen Gangkupplung wird das Losrad des betreffenden Gangradsatzes mit der zugeordneten Getriebewelle drehfest verbunden und damit der betreffende Gang getriebeintern eingelegt. Durch das Öffnen der Gangkupplung wird die drehfeste Verbindung des Losrades mit der zugeordneten Getriebewelle wieder gelöst und damit der betreffende Gang getriebeintern ausgelegt. Üblicherweise sind die Gangkupplungen als sperrsynchronisierte oder unsynchronisierte Klauenkupplungen ausgebildet, die jeweils über eine drehfest und axial verschiebbar auf der betreffenden Getriebewelle angeordnete Schaltmuffe ein- und ausrückbar sind.

Zur Betätigung der Schaltmuffe und somit zum getriebeinternen Ein- und Auslegen eines Gangs ist üblicherweise eine Schaltstange vorhanden, die achsparallel zu der betreffenden Getriebewelle angeordnet ist, axial verschiebbar gelagert ist, und über eine starr befestigte und in eine äußere Ringnut der Schaltmuffe eingreifende Schaltgabel formschlüssig mit der Schaltmuffe in Stellverbindung steht. Alternativ dazu kann die Schaltstange auch über einen formschlüssigen Eingriff mit einer Schaltschwinge in Stellverbindung stehen, die zwischen der Schaltstange und der Schaltmuffe angeordnet ist, um eine tangentiale Drehachse schwenkbar gelagert ist, und mit einem gabelförmigen Teil in die äußere Ringnut der Schaltmuffe eingreift.

Zur Begrenzung des Bauraumbedarfs sind die Losräder von zwei benachbarten Gangradsätzen jeweils bevorzugt auf derselben Getriebewelle angeordnet, und die betreffenden zwei Gangkupplungen in einem Schaltpaket mit einer gemeinsamen Schaltmuffe zusammengefasst, so dass das Ein- und Auslegen der betreffenden zwei Gänge über eine Axialverschiebung einer einzigen Schaltstange in jeweils entgegengesetzter Richtung erfolgt.

Insbesondere bei manuell schaltbaren Kraftfahrzeug-Schaltgetrieben sind die Gangradsätze aufeinander folgender Gänge üblicherweise paarweise axial benachbart auf den Getriebewellen angeordnet, weisen paarweise die gleiche Zuordnung der Fest- und Losräder zu den Getriebewellen und ein gemeinsames Schaltpaket auf, so dass jeweils zwei aufeinander folgende Gänge über eine gemeinsame Schaltstange ein- und auslegbar sind. Damit entspricht die Zuordnung der Gänge zu den Schaltstangen dem üblichen H- oder Mehrfach-H-Schaltschema mit mehreren Schaltgassen und einer die Schaltgassen verbindenden Wählgasse einer fahrerseitigen Handschaltvorrichtung, über den ein Fahrer die Auswahl der Schaltgasse sowie das Ein- und Auslegen eines der gewählten Schaltgasse zugeordneten Gangs manuell vornehmen kann.

Die getriebeinterne Zuordnung der Gänge zu den Schaltstangen entspricht in diesem Fall der Zuordnung der betreffenden Gänge zu den Schaltgassen in dem Schaltschema des Handschalthebels. Dies ermöglicht eine relativ einfache mechanische Übertragung der Wähl- und Schaltbewegungen des Handschalthebels über eine getriebeexterne Gestänge- oder Seilzugvorrichtung und eine getriebeinterne Schaltwelle auf die Schaltstangen und die Schaltpakete des Schaltgetriebes, wobei die Schaltwelle zumeist senkrecht zu den die Gangzahnräder tragenden Getriebewellen angeordnet und axial verschiebbar sowie um ihre Längsachse drehbar gelagert ist. Durch eine Axialverschiebung einer derart angeordneten Schaltwelle wird ein zugeordneter Schaltfinger der Schaltwelle in Eingriff mit einem Mitnehmer einer der mehreren Schaltstangen gebracht, was einem Wählvorgang entspricht, d.h. der Wahl einer Schaltgasse. Durch eine Drehung der Schaltwelle um ihre Längsachse wird die betreffende Schaltstange durch die Schwenkbewegung des Schaltfingers axial verschoben, was einem Schaltvorgang entspricht, also dem Ein- und Auslegen eines Gangs der betreffenden Schaltgasse.

Eine Wählbewegung des Handschalthebels, d.h. ein Wechsel der Schalthebelposition zwischen zwei Schaltgassen innerhalb der Wählgasse, entspricht somit getriebeintern einem Wechsel der Stellverbindung der Schaltwelle zwischen zwei Schaltstangen, und eine Schaltbewegung des Schalthebels, also ein Wechsel der Schalthebelposition zwischen einer Schaltposition eines ersten Gangs, einer Neutralposition und einer Schaltposition eines zweiten Gangs innerhalb der gewählten Schaltgasse, entspricht getriebeintern einer Axialverschiebung der mit der Schaltwelle über die zugeordnete Schaltstange gekoppelten Schaltmuffe zwischen einer ersten Schaltposition, in welcher die Gangkupplung des ersten zugeordneten Gangs eingerückt ist, einer Neutralposition, in welcher die Gangkupplungen beider zugeordneten Gänge ausgerückt sind, und einer zweiten Schaltposition, in welcher die Gangkupplung des zweiten zugeordneten Gangs eingerückt ist.

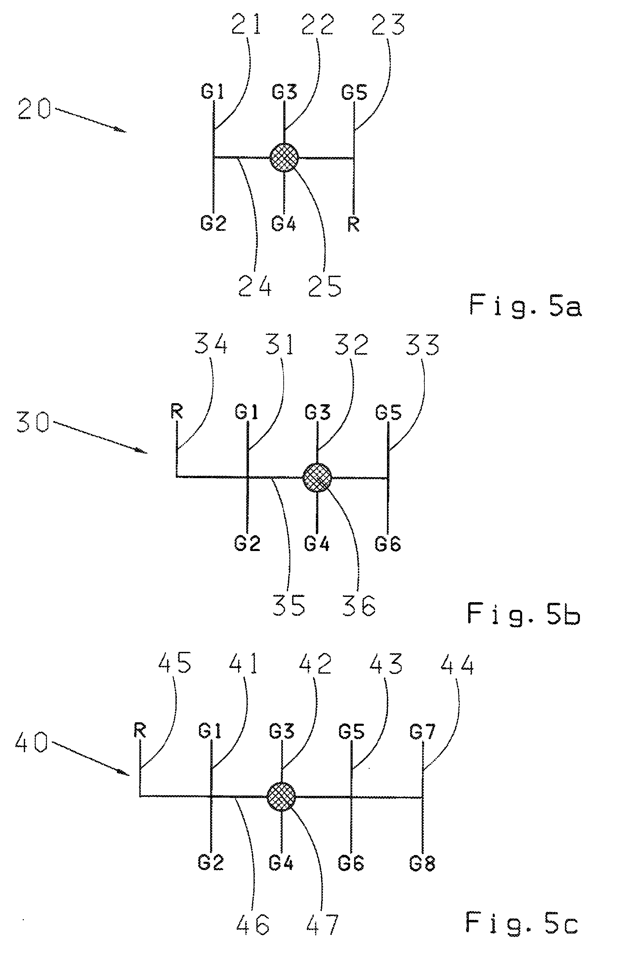

Manuell schaltbare Schaltgetriebe von Kraftfahrzeugen weisen bislang üblicherweise fünf oder sechs Vorwärtsgänge und demzufolge eine relativ geringe Anzahl von Schaltgassen auf. An sich bekannte Schaltschemata derartiger Schaltgetriebe sind in Fig. 5a und Fig. 5b dargestellt. Das bekannte Schaltschema 20 eines Fünfganggetriebes weist gemäß Fig. 5a nur drei Schaltgassen 21, 22, 23 und eine die Schaltgassen verbindende Wählgasse 24 auf. Der erste Gang G1 und der zweite Gang G2 sind einer äußeren ersten Schaltgasse 21 zugeordnet. Der dritte Gang G3 und der vierte Gang G4 sind einer mittleren zweiten Schaltgasse 22 zugeordnet, in welcher der Handschalthebel 25 innerhalb der Wählgasse 24 mittels Federelementen gehalten wird bzw. in die der Handschalthebel 25 bei einem Loslassen innerhalb der Wählgasse 24 selbsttätig zurückgestellt wird. Der fünfte Gang G5 und der Rückwärtsgang R sind einer äußeren dritten Schaltgasse 23 zugeordnet.

Um ein versehentliches Einlegen des Rückwärtsgangs R zu vermeiden, ist bei einer Schaltvorrichtung mit einem derartigen Schaltschema 20 üblicherweise eine Schaltsperre vorgesehen, die als eine Schlagsperre, als eine Tauch-Drucksperre oder als eine Zugringsperre ausgebildet sein kann.

Das bekannte Schaltschema 30 eines Sechsganggetriebes gemäß Fig. 5b weist vier Schaltgassen 31, 32, 33, 34 und eine die Schaltgassen verbindende Wählgasse 35 auf. In diesem Schaltschema 30 ist der äußeren dritten Schaltgasse 33 neben dem fünften Gang G5 auch der sechste Gang G6 zugeordnet. Die vierte Schaltgasse 34 ist außerhalb der äußeren ersten Schaltgasse 31 angeordnet und nur mit dem Rückwärtsgang R belegt.

Ein versehentliches Einlegen des Rückwärtsgangs R kann bei einer Schaltvorrichtung mit einem derartigen Schaltschema 30 sowohl durch eine Schaltsperre der vorbeschriebenen Art als auch durch eine Wählsperre verhindert werden, durch die ausgehend von der Neutralposition der ersten Schaltgasse 31 ein Anwählen der vierten Schaltgasse 34 durch eine erhöhte Wählkraft erschwert oder durch eine lösbare formschlüssige Sperre verhindert wird. Derartige Schalt- und Wählsperren wirken üblicherweise mit dem Handschalthebel 36 in der getriebeexternen Schaltvorrichtung zusammen, sind zumeist fahrzeugspezifisch ausgebildet und auf den Einsatz in manuellen Schaltgetrieben beschränkt.

Aufgrund der Forderung nach einer immer weiteren Absenkung des Kraftstoffverbrauchs von Kraftfahrzeugen wird jedoch eine Erhöhung der Ganganzahl der Schaltgetriebe erforderlich, da eine Verringerung der Übersetzungssprünge zwischen den Gängen einen weitgehend permanenten Betrieb des betreffenden Verbrennungsmotors in einem Drehzahlbereich mit einem spezifisch niedrigen Kraftstoffverbrauch ermöglicht. Dies hat zwangsläufig eine höhere Anzahl von Schaltgassen zur Folge, welches insbesondere bei manuellen Schaltgetrieben aufgrund eines relativ geringen Abstands der Schaltgassen im Schaltschema des Handschalthebels 47 zu einem Verwählen und einem Schalten in einen ungeeigneten Gang führen kann.

Zur Veranschaulichung der Problematik ist in Fig. 5c das Schaltschema 40 eines Achtganggetriebes mit fünf Schaltgassen 41, 42, 43, 44, 45 und einer die Schaltgassen verbindenden Wählgasse 46 abgebildet. Dieses Schaltschema 40, das in ähnlicher Form um einen Kriechgang erweitert durch die in der DE 39 34 733 A1 beschriebenen Schaltvorrichtung eines Nutzfahrzeuggetriebes bekannt ist, weist gegenüber dem Schaltschema 30 des Sechsganggetriebes nach Fig. 5b eine weitere Schaltgasse 44 auf, die außerhalb der dritten Schaltgasse 43 angeordnet ist und den siebten Gang G7 sowie den achten Gang G8 umfasst.

Bei einem Schaltgetriebe bzw. einer Schaltvorrichtung mit einem derartigen Schaltschema besteht die Gefahr, dass bei einem Hochschaltvorgang aus einem Gang G3 oder G4 der zweiten Schaltgasse 42 in einen Gang G5 oder G6 der dritten Schaltgasse 43 die Gasse für die Gänge G5, G6 versehentlich übersprungen und demzufolge irrtümlich in einen Gang G7, G8 der vierten Schaltgasse 44 geschaltet wird. Diese Fehlschaltung führt zu einem erhöhten Zugkraftverlust und macht eine sofortige Korrekturschaltung in einen niedrigeren Gang G5, G6 erforderlich.

Während eine Abgrenzung des Rückwärtsgangs R bzw. der Schaltgasse 45 des Rückwärtsgangs R durch eine Schalt- oder Wählsperre der vorbeschriebenen Art möglich ist, wird eine derartige Abgrenzung der mit den höchsten Vorwärtsgängen G7, G8 belegten äußeren Schaltgasse 44 wegen der damit verbundenen Schaltverzögerung als inakzeptabel beurteilt. Es erscheint daher sinnvoll, eine Schaltvorrichtung eines mehrstufigen Schaltgetriebes mit einem derartigen Schaltschema mit einer Wählsperre zur betriebsabhängigen Verhinderung eines Anwählens der äußeren Schaltgasse 44 auszurüsten.

Eine Schaltvorrichtung eines Schaltgetriebes mit einer hierzu geeigneten getriebeintern angeordneten Wählsperre ist in der DE 100 31 754 A1 beschrieben. Diese stellkrafterhöhend wirksame Wählsperre umfasst eine federbelastete Kugel, die senkrecht zu der Schaltwelle des Schaltgetriebes geführt ist und in Kontakt mit der Oberfläche der Schaltwelle steht. Durch einen Anstieg des Durchmessers der Schaltwelle zwischen einer vorzugsweise mit dem Rückwärtsgang R belegten äußeren Schaltgasse und der nächstinneren Schaltgasse ergibt sich bei einer axialen Wählbewegung der Schaltwelle in die äußere Schaltgasse ein Anstieg der erforderlichen Stellkraft, der z.B. bei einer elektromotorischen Ausbildung des Wählstellers durch eine erhöhte Stromaufnahme eines diesbezüglichen Aktuators erkannt werden kann.

Bei einer aus der DE 31 41 271 C2 bekannten Schaltvorrichtung eines Gruppengetriebes mit einem Hauptgetriebe und einer zweistufigen Bereichsgruppe, die über eine gemeinsame Schaltwelle manuell schaltbar sind, weist eine ähnliche Wählsperre einen federbelasteten Stößel auf, der senkrecht zu der Schaltwelle geführt ist und in Kontakt mit der Oberfläche der Schaltwelle steht. Durch einen Anstieg des Durchmessers der Schaltwelle zwischen einer mit den niedrigen Gängen des Schnellfahrbereichs belegten Schaltgasse und einer mit den hohen Gängen des Langsamfahrbereichs belegten Schaltgasse ergibt sich bei einer axialen Wählbewegung der Schaltwelle zur Bereichsrückschaltung ein Anstieg der erforderlichen Stellkraft. Durch die Zuschaltung eines über einen Druckkolben auf die Druckfeder des Stößels wirksamen Druckmitteldruckes, die bei Überschreitung einer höheren Fahrgeschwindigkeit erfolgt, wird die erforderliche Stellkraft derart erhöht, dass eine versehentliche Bereichsrückschaltung weitgehend ausgeschlossen ist.

In der DE 30 46 885 C2 ist dagegen eine Schaltvorrichtung eines Gruppengetriebes mit einem manuell schaltbaren Hauptgetriebe und einer automatisiert schaltbaren zweistufigen Bereichsgruppe beschrieben. Die Umschaltung der Bereichsgruppe erfolgt über einen doppeltwirkenden druckmittelbetätigten Schaltzylinder, der über zwei die Steuerkontur eines auf der Schaltwelle befestigten Rastkörpers abtastenden Wegeventile angesteuert wird. Um bei einer Bereichsrückschaltung eine unmittelbare Anwahl der mit den niedrigen Gängen belegten Schaltgasse des Hauptgetriebes zu vermeiden, ist ein senkrecht zu der Schaltwelle ausgerichteter Sperrzylinder mit einem Sperrbolzen vorgesehen, der ebenfalls von den beiden Wegeventilen ansteuerbar ist. Bei einer Bereichsrückschaltung wird der Sperrbolzen durch die Zufuhr von Druckmittel gegen die Kraft einer Rückstellfeder in eine Sperrstellung gedrückt, in der eine Axialverschiebung der Schaltwelle von der mit den hohen Gängen belegten Schaltgasse in die mit den niedrigen Gängen belegte Schaltgasse des Hauptgetriebes formschlüssig gesperrt ist. Nach einer Drucklosschaltung des Sperrzylinders, die bei Erreichen der mit den hohen Gängen belegten Schaltgasse erfolgt, entweicht das Druckmittel über eine Drossel, so dass die Entsperrung der mit den niedrigen Gängen belegten Schaltgasse zeitverzögert eintritt.

Eine Schaltvorrichtung eines Schaltgetriebes mit einer ähnlichen Wählsperre ist aus der gattungsgemäßen DE 102 32 530 A1 bekannt. Die Wählsperre weist einen senkrecht zu der Schaltwelle ausgerichteten Sperrzylinder mit einem Sperrbolzen auf, der permanent von einem Schmieröldruck des Schaltgetriebes beaufschlagt wird. Bei hohem Schmieröldruck, der während der Fahrt bei zumeist geschlossener Kupplung vorliegt, wird der Sperrbolzen gegen die Federkraft einer Rückstellfeder in eine Sperrstellung gedrückt, in der eine Axialverschiebung der Schaltwelle in eine mit dem Rückwärtsgang belegte äußere Schaltgasse formschlüssig gesperrt ist. Bei niedrigem Schmieröldruck, der bei Fahrzeugstillstand und geöffneter Kupplung vorliegt, wird der Sperrbolzen von der Rückstellfeder in seine Ruhestellung gedrückt und damit das Anwählen der äußeren Schaltgasse sowie das Einlegen des Rückwärtsgangs ermöglicht.

Eine Schaltvorrichtung eines manuell schaltbaren Schaltgetriebes mit einer fahrgeschwindigkeitsabhängigen Wählsperre ist in der DE 199 08 147 A1 beschrieben. Diese bekannte Wählsperre weist ein Fliehkraftmesswerk auf, das bevorzugt an der permanent mit den Antriebsrädern des Kraftfahrzeugs in Triebverbindung stehenden Ausgangswelle des Schaltgetriebes angeordnet ist. Bei hoher Fahrgeschwindigkeit wird ein mechanisch mit dem Fliehkraftmesswerk verbundener Sperrbolzen in eine Sperrstellung verschoben, in der eine Axialverschiebung der Schaltwelle in eine mit dem Rückwärtsgang belegte äußere Schaltgasse formschlüssig gesperrt ist. Bei niedriger Fahrgeschwindigkeit, insbesondere bei Fahrzeugstillstand, wird der Sperrbolzen von einer Rückstellfeder in seine Ruhestellung zurück verschoben und damit die äußere Schaltgasse mit dem Rückwärtsgang entsperrt.

Die Wählsperren der vorgenannten Schaltvorrichtungen könnten mit relativ geringem Änderungsaufwand auch zur betriebsabhängigen Sperrung einer mit den höchsten Vorwärtsgängen belegten äußeren Schaltgasse verwendet werden. Mit den aus der DE 100 31 754 A1 und der DE 31 41 271 C2 bekannten Wählsperren kann ein versehentliches Anwählen einer äußeren Schaltgasse aufgrund der stellkrafterhöhenden Wirkungsweise dieser Wählsperren jedoch nicht sicher verhindert werden. Zudem weisen die bekannten Wählsperren nach der DE 31 41 271 C2, DE 30 46 885 C2 und der DE 199 08 147 A1 jeweils einen ungünstig hohen steuerungstechnischen Aufwand auf, der mit einem hohen Fertigungsaufwand und einer hohen Störungsanfälligkeit verbunden ist. Die aus der DE 31 41 271 C2, der DE 30 46 885 C2 und der DE 102 32 530 A1 bekannten Wählsperren sind aufgrund ihrer druckmittelbasierten Funktionsweise außerdem als besonders störungsanfällig zu beurteilen.

Vor diesem Hintergrund liegt der Erfindung die Aufgabe zugrunde, eine formschlüssig wirksame Wählsperre einer Schaltvorrichtung eines Kraftfahrzeug-Schaltgetriebes der eingangs genannten Art vorzuschlagen, die einen einfachen und Platz sparenden Aufbau aufweist, ohne Fremdenergie wirksam ist, und sowohl in einem manuell schaltbaren Schaltgetriebe als auch in einem automatisiert schaltbaren Schaltgetriebe nutzbar ist.

Diese Aufgabe ist durch eine Schaltvorrichtung mit den Merkmalen des Hauptanspruchs gelöst, während vorteilhafte Ausgestaltungen und Weiterbildungen in den Ansprüchen 2 bis 15 definiert sind.

Demnach betrifft die Erfindung eine Schaltvorrichtung eines Kraftfahrzeug-Schaltgetriebes, das mindestens zwei achsparallele, selektiv über mehrere Gangradsätze unterschiedlicher Übersetzung miteinander in Triebverbindung bringbare Getriebewellen aufweist, mit einer Schaltwelle, die zur Übertragung von Wählvorgängen axial verschiebbar und zur Übertragung von Schaltvorgängen um ihre Längsachse drehbar gelagert im Getriebegehäuse angeordnet ist, und mit einer formschlüssig wirksamen Wählsperre zur betriebsabhängigen Verhinderung einer Axialverschiebung der Schaltwelle in eine äußere Schaltgasse.

Zur Lösung der Aufgabe ist bei dieser Schaltvorrichtung vorgesehen, dass die Wählsperre einen Sperrring umfasst, der koaxial zu der Schaltwelle axial verschiebbar und drehbar gelagert ist, der eine axial innenliegende Anschlagfläche mit mindestens einem um den äußeren Schaltgassenabstand X, d.h. den axialen Stellweg der Schaltwelle zwischen der äußeren Schaltgasse und der benachbarten nächstinneren Schaltgasse, axial hervorstehenden Sperrzahn und eine axial außenliegende Sperrfläche aufweist. Der Sperrring wird mittels einer Linearfeder in einer axialen Ruheposition gehalten, in der eine Axialverschiebung der Schaltwelle in Richtung der äußeren Schaltgasse spätestens bei Erreichen der zu der nächstinneren Schaltgasse benachbarten zweitinneren Schaltgasse zu einem Anlegen einer Anschlagfläche der Schaltwelle an den Sperrzahn führt, und von der aus eine weitere Axialverschiebung der Schaltwelle unter axialer Mitnahme des Sperrrings und Spannung der Linearfeder bei Erreichen der nächstinneren Schaltgasse zu einem Anlegen der außenliegenden Sperrfläche des Sperrrings an eine gehäusefeste Sperrfläche führt. Hierdurch ist sichergestellt, dass die Schaltwelle nicht über die nächstinnere Schaltgasse hinaus axial verschoben werden kann, wodurch das Anwählen der äußeren Schaltgasse und das Einlegen eines Gangs der äußeren Schaltgasse zunächst formschlüssig verhindert ist. Zudem wird der Sperrring mittels einer Torsionsfeder in einer umfangsseitigen Ruheposition gehalten, in der eine Drehung der Schaltwelle bei Erreichen einer Schaltposition mindestens eines Gangs der nächstinneren Schaltgasse unter der Rückstellkraft der gespannten Linearfeder zu einem axialen Eingriff des Sperrzahns des Sperrrings in eine axiale Ausnehmung in der Anschlagfläche der Schaltwelle und damit zu einer axialen Rückstellung des Sperrrings um den Schaltgassenabstand bis zum Anlegen der Anschlagfläche des Sperrrings an die Anschlagfläche der Schaltwelle führt. Hierdurch ist die äußere Schaltgasse wieder entsperrt, so dass diese nach dem Auslegen des betreffenden Ganges, d.h. nach einem Zurückdrehen der Schaltwelle in die Neutralposition, angewählt und ein dieser zugeordneter Gang eingelegt werden kann.

Die Konturen des Sperrzahns des Sperrrings und der axialen Ausnehmung der Schaltwelle können im Prinzip beliebig konturiert ausgebildet sein. Zur Vermeidung einer Abnutzung oder Beschädigung der axialen Außenkante des Sperrzahns und der Anschlagfläche der Schaltfläche ist jedoch eine rechteckige Kontur, mit der ein großflächiger Kontakt beider Bauteile erzielt wird, zu bevorzugen. Im Sinne einer geometrischen Umkehr ist es auch möglich, dass die Anordnung des Sperrzahns an der Anschlagfläche des Sperrrings und die Anordnung der axialen Ausnehmung in der Anschlagfläche der Schaltwelle bei gleicher Funktionsweise austauschbar sind.

Die Sperrvorrichtung verhindert durch die formschlüssige Sperrung einer weiteren Axialverschiebung der Schaltwelle zuverlässig ein unmittelbares Anwählen der äußeren Schaltgasse von einer innenliegenden Schaltgasse aus, sofern vorher kein Gang der zu der äußeren Schaltgasse benachbarten nächstinneren Schaltgasse eingelegt wurde. Durch die axiale Rückstellung des Sperrrings in der Schaltposition eines eingelegten Gangs der nächstinneren Schaltgasse wird diese Sperrwirkung jedoch aufgehoben, so dass danach eine Anwahl der äußeren Schaltgasse und das Einlegen eines dieser zugeordneten Gangs ermöglicht ist.

Die Sperrvorrichtung gemäß der Erfindung weist wenige und geometrisch einfach ausgebildete Bauteile auf, sie ist insgesamt einfach sowie Platz sparend aufgebaut und somit kostengünstig herstellbar. Zudem ist diese Sperrvorrichtung aufgrund ihrer formschlüssigen und hilfsenergiefreien Wirkungsweise besonders funktionssicher. Aufgrund der getriebeinternen Anordnung ist die erfindungsgemäße Sperrvorrichtung zudem sowohl bei manuell schaltbaren als auch bei automatisiert schaltbaren Schaltgetrieben einsetzbar.

Der Sperrring der Sperrvorrichtung kann unmittelbar auf der Schaltwelle gleitgelagert sein. Bei einer Ausbildung der Schaltwelle als eine auf einer gehäusefesten Führungswelle gelagerte Hohlwelle ist der Sperrring jedoch bevorzugt unmittelbar auf der Führungswelle gleitgelagert angeordnet. Eine weitere Möglichkeit besteht darin, dass der Sperrring auf einer koaxial zu der Schaltwelle axial endseitig an einem Gehäusebauteil montierten Lagerhülse gleitgelagert angeordnet ist.

Zur Ermöglichung eines bedarfsweisen Überspringens eines Ganges der nächstinneren Schaltgasse ist vorteilhaft für die Schaltpositionen beider Gänge der nächstinneren Schaltgasse jeweils mindestens eine axiale Ausnehmung in der Anschlagfläche der Schaltwelle vorgesehen.

Um eine asymmetrische Belastung und eine damit verbundene Verkantung des Sperrrings zu vermeiden, weist der Sperrring an seiner axial innenliegenden Anschlagfläche zweckmäßig mindestens zwei diagonal gegenüberliegend angeordnete axial hervorstehende Sperrzähne auf, und in der Anschlagfläche der Schaltwelle sind in jeder entsperrenden Schaltposition der nächstinneren Schaltgasse entsprechend jeweils zwei diagonal gegenüberliegend angeordnete axiale Ausnehmungen vorhanden.

Die mit dem Sperrring in Wirkverbindung stehende Linearfeder ist vorzugsweise als eine zwischen dem Sperrring und einem gehäusefesten Bauteil angeordnete Druckfeder ausgebildet.

In einer bevorzugten Ausführungsform ist die Druckfeder als eine Schraubenfeder ausgebildet, die koaxial zu der Schaltwelle angeordnet ist, und deren Außenwindungen jeweils an einem Ringbund des Sperrrings und des gehäusefesten Bauteils anliegen.

Alternativ dazu kann die Druckfeder auch als eine Tellerfeder ausgebildet sein, die koaxial zu der Schaltwelle angeordnet ist, und deren axiale Außenränder jeweils an einem Ringbund des Sperrrings und des gehäusefesten Bauteils anliegen.

In einer anderen möglichen Bauart kann die Druckfeder auch als eine Ringblattfeder ausgebildet sein, die koaxial zu der Schaltwelle angeordnet ist, und deren axiale Außenränder jeweils an einem Ringbund des Sperrrings und des gehäusefesten Bauteils anliegen.

Die Torsionsfeder ist bevorzugt als eine Schenkelfeder ausgebildet, die koaxial zu der Schaltwelle angeordnet ist, und deren Schenkel bei einer axialen Abwinkelung jeweils in eine Axialbohrung des Sperrrings sowie des gehäusefesten Bauteils eingesetzt sind und bei einer radialen Abwinkelung jeweils an einem radialen Vorsprung des Sperrrings und des gehäusefesten Bauteils anliegen.

Zur Reduzierung der Bauteilanzahl, zur Einsparung von Bauraum und zur Vereinfachung der Montage sind die Linearfeder und die Torsionsfeder jedoch vorteilhaft in einem gemeinsamen Federelement zusammengefasst.

Das gemeinsame Federelement ist bevorzugt als eine Schenkel-Schraubenfeder ausgebildet, die koaxial zu der Schaltwelle angeordnet ist, deren Außenwindungen jeweils an einem Ringbund des Sperrrings und des gehäusefesten Bauteils anliegen, und deren Schenkel bei einer axialen Abwinkelung jeweils in eine Axialbohrung des Sperrrings und des gehäusefesten Bauteils eingesetzt sind und bei einer radialen Abwinkelung jeweils an einem radialen Vorsprung des Sperrrings und des gehäusefesten Bauteils anliegen.

Die Wählsperre gemäß der Erfindung ist insbesondere für den Einsatz in einem mehrstufigen Schaltgetriebe mit einer äußeren Schaltgasse, die mindestens zwei Schaltgassen außerhalb einer mittleren Schaltgasse liegt und mit dem höchsten Vorwärtsgang oder den beiden höchsten Vorwärtsgängen belegt ist, als Hochschaltsperre vorgesehen.

Die erfindungsgemäße Wählsperre kann jedoch auch in einem mehrstufigen Schaltgetriebe mit einer äußeren Schaltgasse, die mindestens zwei Schaltgassen außerhalb der mittleren Schaltgasse liegt und nur mit dem Rückwärtsgang belegt ist, als Rückwärtsgangsperre genutzt werden. Hierbei muss jedoch in Kauf genommen werden, dass bei einem Anfahren mit dem Rückwärtsgang zu Beginn einer Fahrt zur Entsperrung der äußeren Schaltgasse zunächst ein Gang der nächstinneren Schaltgasse, die zumeist mit den niedrigsten Vorwärtsgängen belegt ist, eingelegt und wieder ausgelegt werden muss.

Zur Verdeutlichung der Erfindung ist der Beschreibung eine Zeichnung mit einem Ausführungsbeispiel beigefügt. In dieser zeigt
- Fig. 1: einen perspektivischen Ausschnitt aus einer getriebeinternen Schaltvorrichtung mit einer an einer Schalt- und Wählwelle wirksamen Wählsperre im montierten Zustand,
- Fig. 2: die Schaltvorrichtung mit der Wählsperre nach Fig. 1 in einer perspektivischen Einzelteildarstellung,
- Fig. 3a - 3b: wesentliche Bauteile der Wählsperre nach Fig. 1 und Fig. 2,
- Fig. 4a - 4f: verschiedene Arbeitsstellungen der Wählsperre gemäß den Figuren 1 bis 3, und
- Fig. 5a - 5c: mehrere Schaltschemata mehrstufiger Schaltgetriebe.

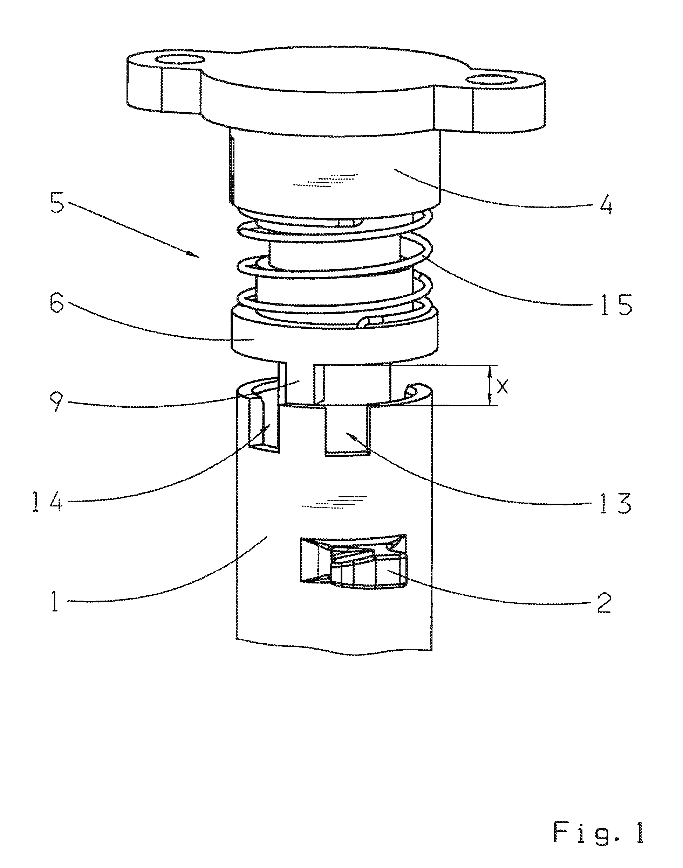

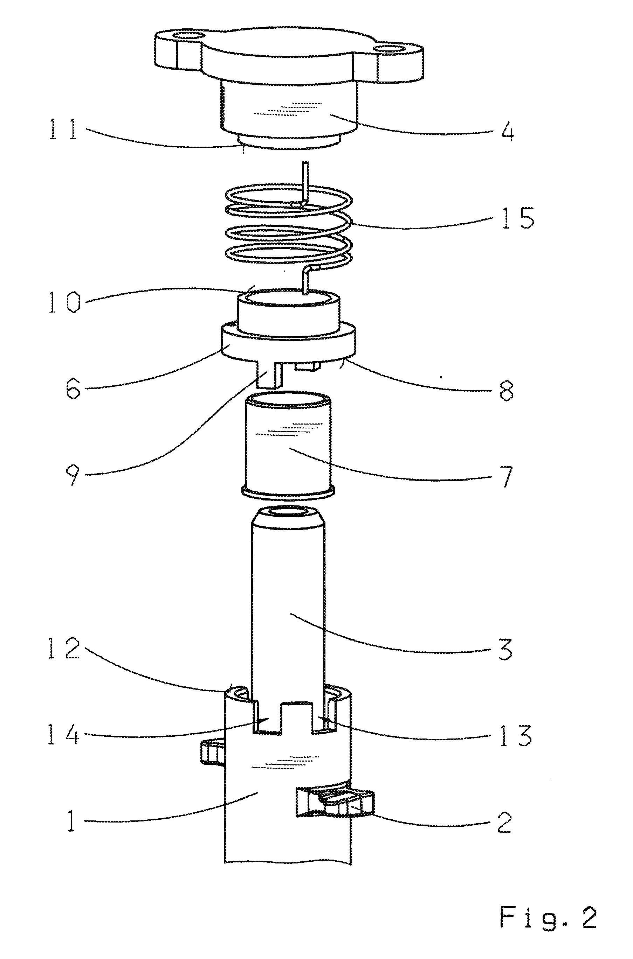

Eine Schaltvorrichtung eines mehrstufigen Schaltgetriebes nach Fig. 1 und Fig. 2 weist eine zu nicht abgebildeten Getriebewellen des Schaltgetriebes tangential und senkrecht angeordnete Schaltwelle 1 mit mindestens einem Schaltfinger 2 auf. Die Schaltwelle 1 ist vorliegend als eine Hohlwelle ausgebildet, die auf einer gehäusefesten Führungswelle 3 axial verschiebbar und um ihre geometrische Längsachse drehbar gelagert ist. Die Führungswelle 3 ist endseitig in einer Bohrung eines gehäusefest montierbaren Lagerdeckels 4 befestigt.

Eine Axialverschiebung der Schaltwelle 1 entspricht einem Wählvorgang, bei dem der mindestens eine Schaltfinger 2 aus der formschlüssigen Koppelung mit einer nicht dargestellten Schaltstange, die einer bestimmten Schaltgasse zugeordnet ist, gelöst und mit einer anderen nicht dargestellten Schaltstange, die einer anderen Schaltgasse zugeordnet ist, in formschlüssigen Eingriff gebracht wird. Eine Drehung der Schaltwelle 1 entspricht dabei einem Schaltvorgang, in dem die betreffende Schaltstange durch die Verschwenkung des Schaltfingers 2 axial verschoben und dadurch ein der betreffenden Schaltgasse zugeordneter Gang ein- oder ausgelegt wird.

Eine formschlüssig wirksame Wählsperre 5 weist als wesentliches Bauteil einen Sperrring 6 auf, der koaxial zu der Schaltwelle 1 angeordnet und auf einer in eine Bohrung des Lagerdeckels 4 eingepressten Lagerhülse 7 begrenzt axial verschiebbar sowie um die geometrische Längsachse der Schaltwelle 1 drehbar gelagert ist.

Der Sperrring 6 weist auf seiner dem Lagerdeckel 4 axial abgewandten Seite eine axial innenliegende Anschlagfläche 8 mit zwei diagonal gegenüberliegend angeordneten, um den äußeren Schaltgassenabstand X, d.h. um den axialen Stellweg der Schaltwelle 1 zwischen der äußeren Schaltgasse 44 und der benachbarten nächstinneren Schaltgasse 43, axial hervorstehenden Sperrzähne 9 auf. Auf der dem Lagerdeckel 4 axial zugewandten Seite ist der Sperrring 6 zudem mit einer axial außenliegenden Sperrfläche 10 versehen.

Der Lagerdeckel 4 weist eine mit der Sperrfläche 10 des Sperrrings 6 in Kontakt bringbare Sperrfläche 11 auf, durch die eine Axialverschiebung des Sperrrings 6 nach außen begrenzt ist.

Die Schaltwelle 1 weist axial endseitig eine Anschlagfläche 12 mit zwei umfangsseitig beabstandet angeordneten Paaren diagonal gegenüberliegend angeordneter Ausnehmungen 13, 14 auf. Mittels einer als Druck- und Torsionsfeder wirksamen Schenkel-Schraubenfeder 15, die in koaxialer Anordnung formschlüssig einerseits an dem Sperrring 6 und andererseits an dem Lagerdeckel 4 befestigt ist, wird der Sperrring 6 in einer axialen und rotatorischen Ruhestellung gehalten, die beispielsweise in der Abbildung von Fig. 1 vorliegt.

Nachfolgend wird die Funktionsweise der Wählsperre 5 unter Zugrundelegung eines dem Schaltschema 40 gemäß Fig. 5c entsprechenden getriebeinternen Schaltschemas näher erläutert, wobei die mit den höchsten Gängen G7 und G8 belegte äußere Schaltgasse 44 durch die Wählsperre 5 betriebsabhängig gesperrt werden soll.

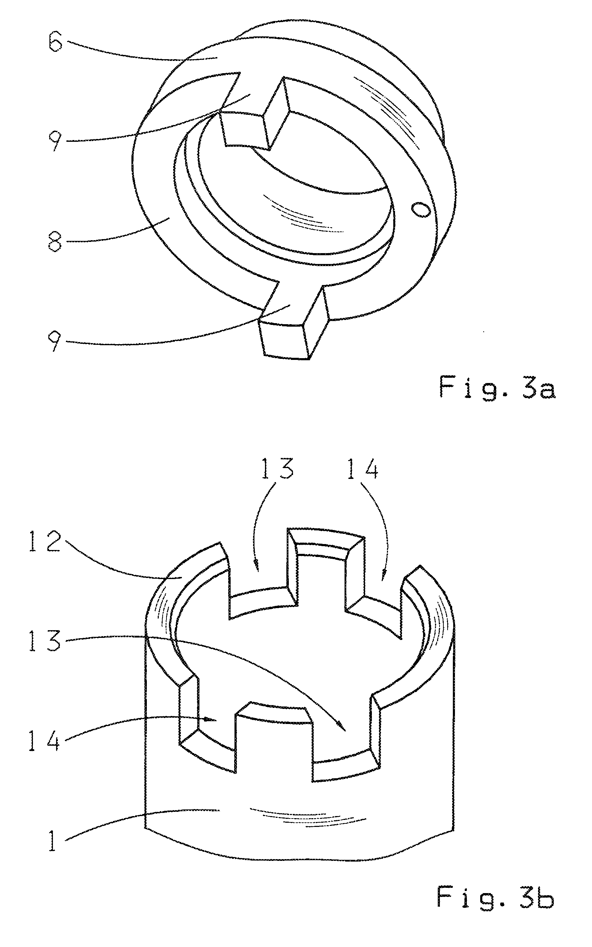

Zum Verständnis der Funktionsweise ist zunächst ein genauerer Blick auf die axial einander zugewandten Konturen des Sperrrings 6 und der Schaltwelle 1 sinnvoll, die in den Abbildungen von Fig. 3a und Fig. 3b besonders gut erkennbar sind. Die beiden Sperrzähne 9 des Sperrrings 6 sind umfangsseitig derart ausgerichtet, dass diese in der rotatorischen Ruhestellung des Sperrrings 6 bei einer Axialverschiebung der Schaltwelle 1 in Richtung des Lagerdeckels 4 bzw. der äußeren Schaltgasse 44 gegen die Anschlagfläche 12 der Schaltwelle 1 stoßen. Die beiden Paare der in der Anschlagfläche 12 der Schaltwelle 1 angeordneten Ausnehmungen 13, 14 sind umfangsseitig derart angeordnet, dass diese bei einer Drehung der Schaltwelle 1 in eine Schaltposition eines Gangs G5, G6 der zu der äußeren Schaltgasse 44 nächstinneren Schaltgasse 43 jeweils in Überdeckung mit den Sperrzähnen 9 des Sperrrings 6 kommen, wonach die Sperrzähne 9 des Sperrrings 6 in die jeweiligen Ausnehmungen 13, 14 der Schaltwelle 1 axial eingreifen können.

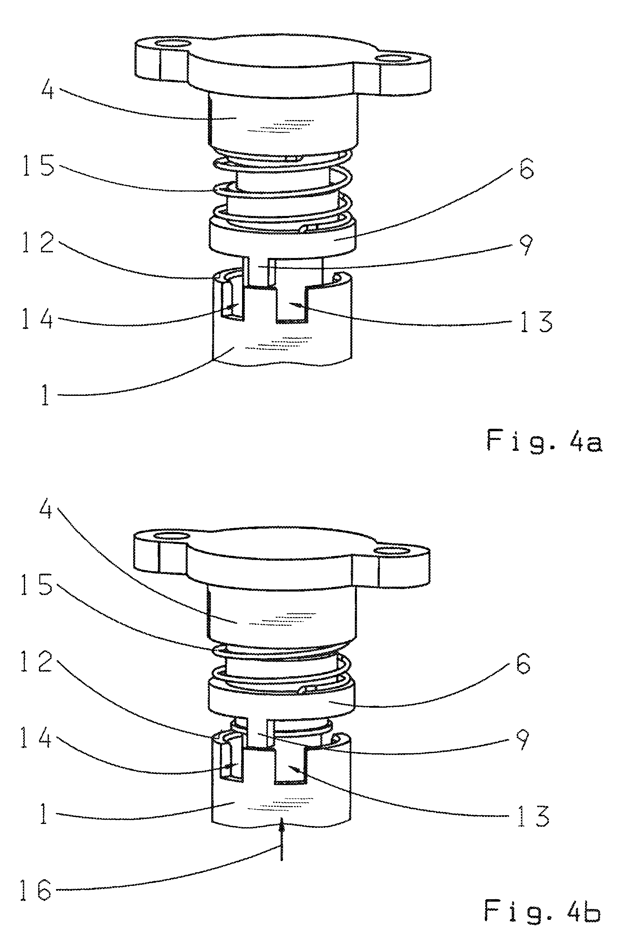

Die konkrete Funktionsweise der Wählsperre 5 wird nun anhand der Figuren 4a bis 4f verdeutlicht, in denen charakteristische Arbeitsstellungen der Wählsperre 5 dargestellt sind. Durch die Schenkel-Schraubenfeder 15 wird der Sperrring 6 in einer axialen Ruheposition gehalten, in der das Anlegen der Anschlagfläche 12 der Schaltwelle 1 an die Sperrzähne 9 des Sperrrings 6 in einer Axialposition der Schaltwelle 1 erfolgt, die der zu der äußeren Schaltgasse 44 zweitinneren Schaltgasse, d.h. vorliegend der mit den Gängen G3 und G4 belegten mittleren Schaltgasse 42 entspricht (siehe Fig. 4a).

Wird die Schaltwelle 1 dann bei einem Wählvorgang mit einer Axialverschiebung 16 weiter in Richtung des Lagerdeckels 4 bzw. der äußeren Schaltgasse 44 verschoben, so wird unter axialer Mitnahme des Sperrrings 6 und axialer Spannung der Schenkel-Schraubenfeder 15 die Wählposition der zu der äußeren Schaltgasse 44 nächstinneren Schaltgasse 43 erreicht. In dieser in Fig. 4b dargestellten Arbeitsstellung kommt die Sperrfläche 10 des Sperrrings 6 zur Anlage an die Sperrfläche 11 des Lagerdeckels 4, so dass eine weitere Axialverschiebung der Schaltwelle 1 und somit eine Anwahl der äußeren Schaltgasse 44 formschlüssig verhindert wird.

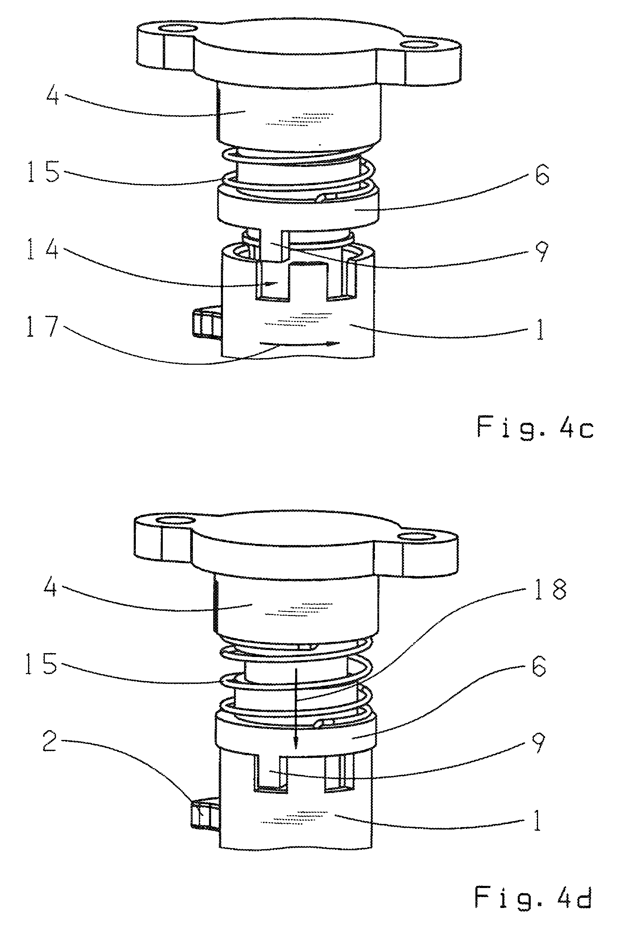

Wenn dann jedoch durch eine Drehung 17 der Schaltwelle 1 in eine Schaltposition der nächstinneren Schaltgasse 43, hier beispielhaft in die Schaltposition des sechsten Gangs G6, der betreffende Gang eingelegt wird, so kommt das Paar der dieser Schaltposition zugeordneten Ausnehmungen 14 der Schaltwelle 1 in Überdeckung mit den Sperrzähnen 9 des Sperrrings 6 (siehe Fig. 4c). In dieser Arbeitsstellung wird der Sperrring 6 unter der axialen Rückstellkraft der Schenkel-Schraubenfeder 15 bis zur Anlage der Anschlagfläche 8 des Sperrrings 6 an die Anschlagfläche 12 der Schaltwelle 1 axial nach innen zurückgestellt 18 (siehe Fig. 4d).

Da die axiale Höhe X der Sperrzähne 9 exakt dem axialen Stellweg der Schaltwelle 1 zwischen der äußeren Schaltgasse 44 und der nächstinneren Schaltgasse 43 entspricht, ist die äußere Schaltgasse 44 damit entsperrt.

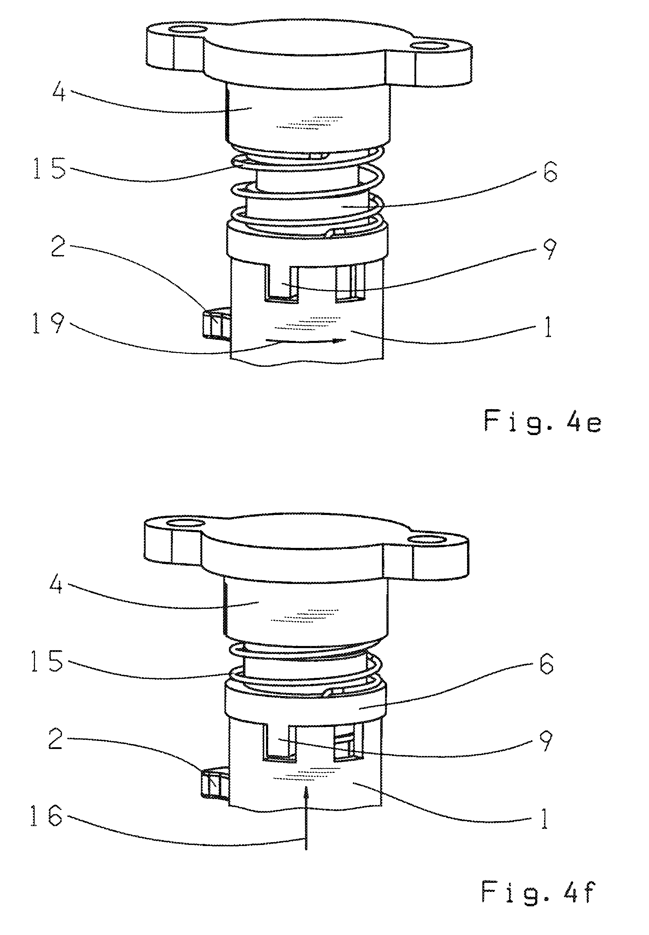

Wird der betreffende Gang G6 durch eine Rückdrehung 19 der Schaltwelle 1 in die Neutralposition der Schaltgasse 43 unter rotatorischer Mitnahme des Sperrrings 6 und eines Aufbaus einer Torsionsspannung in der Schenkel-Schraubenfeder 15 wieder ausgelegt (siehe Fig. 4e), so kann die Schaltwelle 1 unter Erhöhung der axialen Spannung der Schenkel-Schraubenfeder 15 mit einer weiteren Axialverschiebung 16 weiter nach axial außen bewegt werden, bis die Sperrfläche 10 des Sperrrings 6 zur Anlage an die Sperrfläche 11 des Lagerdeckels 4 kommt. Diese in Fig. 4f abgebildete Arbeitsstellung entspricht der Wählposition der äußeren Schaltgasse 44. Nachfolgend kann durch eine Drehung der Schaltwelle 1 ein Gang G7, G8 der äußeren Schaltgasse 44 eingelegt werden.

Nach dem Verlassen der äußeren Schaltgasse 44 kann eine beliebige Schaltgasse 41, 42, 43 angewählt werden. Eine Trennung des Eingriffs der Sperrzähne 9 des Sperrrings 6 in die Ausnehmungen 14 der Schaltwelle 1 erfolgt bei Erreichen der mittleren Schaltgasse 42, worauf der Sperrring 6 unter der umfangsseitigen Rückstellkraft der Schenkel-Schraubenfeder 15 wieder in seine rotatorische Ruhestellung zurückkehrt.

Durch die erfindungsgemäße Sperrvorrichtung wird somit eine direkte Hochschaltung von einem Gang G3, G4 der mittleren Schaltgasse 42 in einen Gang G7, G8 der äußeren Schaltgasse 44 und ein damit verbundener starker Zugkrafteinbruch rein mechanisch zuverlässig verhindert. Zur Entsperrung der äußeren Schaltgasse 44 muss zunächst ein Gang G5, G6 der zu der äußeren Schaltgasse 44 benachbarten nächstinneren Schaltgasse 43 eingelegt werden. Eine direkte Rückschaltung von einem Gang G7, G8 der äußeren Schaltgasse 44 in einen Gang G3, G4 einer weiter innen liegenden Schaltgasse 42, also ein Überspringen der nächstinneren Schaltgasse 43, wird durch die Sperrvorrichtung 5 dagegen nicht verhindert.

### Bezugszeichen

- 1: Schaltwelle
- 2: Schaltfinger
- 3: Führungswelle
- 4: Lagerdeckel
- 5: Wählsperre
- 6: Sperrring
- 7: Lagerhülse
- 8: Anschlagfläche von Sperrring 6
- 9: Sperrzahn
- 10: Sperrfläche von Sperrring 6
- 11: Sperrfläche von Lagerdeckel 4
- 12: Anschlagfläche von Schaltwelle 1
- 13: Axiale Ausnehmung
- 14: Axiale Ausnehmung
- 15: Schenkel-Schraubenfeder
- 16: Axialverschiebung von Schaltwelle 1
- 17: Drehung von Schaltwelle 1
- 18: Axiale Rückstellung von Sperrring 6
- 19: Rückdrehung von Schaltwelle 1
- 20: Schaltschema
- 21: Erste Schaltgasse
- 22: Zweite, mittlere Schaltgasse
- 23: Dritte Schaltgasse
- 24: Wählgasse
- 25: Handschalthebel
- 30: Schaltschema
- 31: Erste Schaltgasse
- 32: Zweite, mittlere Schaltgasse
- 33: Dritte Schaltgasse
- 34: Vierte Schaltgasse
- 35: Wählgasse
- 36: Handschalthebel
- 40: Schaltschema
- 41: Erste Schaltgasse
- 42: Zweite, mittlere Schaltgasse
- 43: Dritte, nächstinnere Schaltgasse
- 44: Vierte, äußere Schaltgasse
- 45: Fünfte Schaltgasse
- 46: Wählgasse
- 47: Handschalthebel
- G1 - G8: Vorwärtsgänge
- R: Rückwärtsgang
- X: Axiale Höhe von Sperrzahn 9, (äußerer) Schaltgassenabstand

## Patentansprüche

1. Schaltvorrichtung eines Kraftfahrzeug-Schaltgetriebes, das mindestens zwei achsparallele, selektiv über mehrere Gangradsätze unterschiedlicher Übersetzung miteinander in Triebverbindung bringbare Getriebewellen aufweist, mit einer Schaltwelle (1), die zur Übertragung von Wählvorgängen axial verschiebbar und zur Übertragung von Schaltvorgängen um ihre Längsachse drehbar gelagert in einem Getriebegehäuse angeordnet ist, und mit einer formschlüssig wirksamen Wählsperre (5) zur betriebsabhängigen Verhinderung einer Axialverschiebung der Schaltwelle (1) in eine äußere Schaltgasse (44), **dadurch gekennzeichnet, dass** die Wählsperre (5) einen Sperrring (6) umfasst, der koaxial zu der Schaltwelle (1) axial verschiebbar und drehbar gelagert ist, der eine axial innenliegende Anschlagfläche (8) mit mindestens einem um den äußeren Schaltgassenabstand (X) axial hervorstehenden Sperrzahn (9) sowie eine axial außenliegende Sperrfläche (10) aufweist, der mittels einer Linearfeder in einer axialen Ruheposition gehalten wird, in der eine Axialverschiebung (16) der Schaltwelle (1) in Richtung der äußeren Schaltgasse (44) spätestens bei Erreichen der zweitinneren Schaltgasse (42) zu einem Anlegen einer Anschlagfläche (12) der Schaltwelle (1) an den Sperrzahn (9) und von der aus eine weitere Axialverschiebung (16) der Schaltwelle (1) bei Erreichen der nächstinneren Schaltgasse (43) zu einem Anlegen der Sperrfläche (10) des Sperrrings (6) an eine gehäusefeste Sperrfläche (11) führt, und der mittels einer Torsionsfeder in einer umfangsseitigen Ruheposition gehalten wird, in der eine Drehung (17) der Schaltwelle (1) bei Erreichen einer Schaltposition mindestens eines Gangs (G5, G6) der nächstinneren Schaltgasse (43) zu einem axialen Eingriff des Sperrzahns (9) des Sperrrings (6) in eine axiale Ausnehmung (13, 14) in der Anschlagfläche (12) der Schaltwelle (1) führt.

2. Schaltvorrichtung nach Anspruch 1, **dadurch gekennzeichnet, dass** der Sperrring (6) unmittelbar auf der Schaltwelle (1) gleitgelagert ist.

3. Schaltvorrichtung nach Anspruch 1, **dadurch gekennzeichnet, dass** der Sperrring (6) bei einer Ausbildung der Schaltwelle (1) als eine auf einer gehäusefesten Führungswelle (3) gelagerte Hohlwelle unmittelbar auf der Führungswelle (3) gleitgelagert ist.

4. Schaltvorrichtung nach Anspruch 1, **dadurch gekennzeichnet, dass** der Sperrring (6) auf einer koaxial zu der Schaltwelle (1) axial endseitig an einem Gehäusebauteil (4) montierten Lagerhülse (7) gleitgelagert ist.

5. Schaltvorrichtung nach einem der Ansprüche 1 bis 4, **dadurch gekennzeichnet, dass** für die Schaltpositionen beider Gänge (G5, G6) der nächstinneren Schaltgasse (43) jeweils mindestens eine axiale Ausnehmung (13, 14) in der Anschlagfläche (12) der Schaltwelle (1) vorgesehen ist.

6. Schaltvorrichtung nach einem der Ansprüche 1 bis 5, **dadurch gekennzeichnet, dass** der Sperrring (6) an seiner axial innenliegenden Anschlagfläche (8) mindestens zwei diagonal gegenüberliegend angeordnete axial hervorstehende Sperrzähne (9) aufweist, und dass in der Anschlagfläche (12) der Schaltwelle (1) in jeder entsperrenden Schaltposition der nächstinneren Schaltgasse (43) jeweils zwei diagonal gegenüberliegend angeordnete axiale Ausnehmungen (13, 14) vorgesehen sind.

7. Schaltvorrichtung nach einem der Ansprüche 1 bis 6, **dadurch gekennzeichnet, dass** die Linearfeder als eine zwischen dem Sperrring (6) und einem gehäusefesten Bauteil (4) angeordnete Druckfeder ausgebildet ist.

8. Schaltvorrichtung nach Anspruch 7, **dadurch gekennzeichnet, dass** die Druckfeder als eine Schraubenfeder ausgebildet ist, die koaxial zu der Schaltwelle (1) angeordnet ist, und deren Außenwindungen jeweils an einem Ringbund des Sperrrings (6) und des gehäusefesten Bauteils (4) anliegen.

9. Schaltvorrichtung nach Anspruch 7, **dadurch gekennzeichnet, dass** die Druckfeder als eine Tellerfeder ausgebildet ist, die koaxial zu der Schaltwelle (1) angeordnet ist, und deren axiale Außenränder jeweils an einem Ringbund des Sperrrings (6) und des gehäusefesten Bauteils (4) anliegen.

10. Schaltvorrichtung nach Anspruch 7, **dadurch gekennzeichnet, dass** die Druckfeder als eine Ringblattfeder ausgebildet ist, die koaxial zu der Schaltwelle (1) angeordnet ist, und deren axiale Außenränder jeweils an einem Ringbund des Sperrrings (6) und des gehäusefesten Bauteils (4) anliegen.

11. Schaltvorrichtung nach einem der Ansprüche 1 bis 10, **dadurch gekennzeichnet, dass** die Torsionsfeder als eine Schenkelfeder ausgebildet ist, die koaxial zu der Schaltwelle (1) angeordnet ist, und deren Schenkel bei einer axialen Abwinkelung jeweils in eine Axialbohrung des Sperrrings (6) sowie eines gehäusefesten Bauteils (4) eingesetzt sind und bei einer radialen Abwinkelung jeweils an einem radialen Vorsprung des Sperrrings (6) und des gehäusefesten Bauteils (4) anliegen.

12. Schaltvorrichtung nach einem der Ansprüche 1 bis 11, **dadurch gekennzeichnet, dass** die Linearfeder und die Torsionsfeder in einem gemeinsamen Federelement zusammengefasst sind.

13. Schaltvorrichtung nach Anspruch 12, **dadurch gekennzeichnet, dass** das gemeinsame Federelement als eine Schenkel-Schraubenfeder (15) ausgebildet ist, die koaxial zu der Schaltwelle (1) angeordnet ist, deren Außenwindungen jeweils an einem Ringbund des Sperrrings (6) und eines gehäusefesten Bauteils (4) anliegen, und deren Schenkel bei einer axialen Abwinkelung jeweils in eine Axialbohrung des Sperrrings (6) sowie des gehäusefesten Bauteils (4) eingesetzt sind und bei einer radialen Abwinkelung jeweils an einem radialen Vorsprung des Sperrrings (6) und des gehäusefesten Bauteils (4) anliegen.

14. Schaltvorrichtung nach einem der Ansprüche 1 bis 13, **dadurch gekennzeichnet, dass** die Wählsperre (5) in einem mehrstufigen Schaltgetriebe mit einer äußeren Schaltgasse (44), die mindestens zwei Schaltgassen außerhalb einer mittleren Schaltgasse (42) liegt und mit dem höchsten Vorwärtsgang (G7) oder den beiden höchsten Vorwärtsgängen (G7, G8) belegt ist, als Hochschaltsperre vorgesehen ist.

15. Schaltvorrichtung nach einem der Ansprüche 1 bis 14, **dadurch gekennzeichnet, dass** die Wählsperre (5) in einem mehrstufigen Schaltgetriebe mit einer äußeren Schaltgasse (45), die mindestens zwei Schaltgassen außerhalb der mittleren Schaltgasse (42) liegt und nur mit dem Rückwärtsgang (R) belegt ist, als Rückwärtsgangsperre vorgesehen ist.

## Claims

1. Shift device of a motor vehicle manual gearbox which has at least two axially parallel gearbox shafts which can be selectively placed in drive connection with one another via a plurality of gearwheel sets of different transmission ratio, having a shift shaft (1) which is arranged in a gearbox housing so as to be axially displaceable for the transmission of selector processes and so as to be mounted rotatably about its longitudinal axis for the transmission of shift processes, and having a selector lock (5), which has a positively locking action, for operation-dependent prevention of an axial displacement of the shift shaft (1) into an outer shift lane (44), **characterized in that** the selector lock (5) comprises a lock ring (6) which is mounted so as to be axially displaceable and rotatable coaxially with respect to the shift shaft (1) and which has an axially inner stop surface (8), with at least one lock tooth (9) which projects axially by the outer shift lane spacing (X), and an axially outer lock surface (10), which lock surface is held by means of a linear spring in an axial rest position in which an axial displacement (16) of the shift shaft (1) in the direction of the outer shift lane (44) leads to an abutment of a stop surface (12) of the shift shaft (1) against the lock tooth (9) at the latest when the second-inner shift lane (42) is reached and proceeding from which a further axial displacement (16) of the shift shaft (1) leads to an abutment of the lock surface (10) of the lock ring (6) against a lock surface (11) fixed with respect to the housing when the next-inner shift lane (43) is reached, and which lock surface is held by means of a torsion spring in a circumferential rest position in which a rotation (17) of the shift shaft (1) leads to an axial engagement of the lock tooth (9) of the lock ring (6) into an axial recess (13, 14) in the stop surface (12) of the shift shaft (1) when a shift position of at least one gear (G5, G6) of the next-inner shift lane (43) is reached.

2. Shift device according to Claim 1, **characterized in that** the lock ring (6) is slidingly mounted directly on the shift shaft (1).

3. Shift device according to Claim 1, **characterized in that**, in the case of the shift shaft (1) being embodied as a hollow shaft mounted on a guide shaft (3) which is fixed with respect to the housing, the lock ring (6) is slidingly mounted directly on the guide shaft (3).

4. Shift device according to Claim 1, **characterized in that** the lock ring (6) is slidingly mounted on a bearing sleeve (7) which is mounted, coaxially with respect to the shift shaft (1), axially at the end on a housing component (4).

5. Shift device according to one of Claims 1 to 4, **characterized in that**, for the shift positions of the two gears (G5, G6) of the next-inner shift lane (43), in each case at least one axial recess (13, 14) is provided in the stop surface (12) of the shift shaft (1) .

6. Shift device according to one of Claims 1 to 5, **characterized in that** the lock ring (6) has at least two diagonally oppositely arranged axially protruding lock teeth (9) on its axially inner stop surface (8), and **in that** in each case two diagonally oppositely arranged axial recesses (13, 14) are provided in the stop surface (12) of the shift shaft (1) in each unlocking shift position of the next-inner shift lane (43) .

7. Shift device according to one of Claims 1 to 6, **characterized in that** the linear spring is in the form of a compression spring arranged between the lock ring (6) and a component (4) which is fixed with respect to the housing.

8. Shift device according to Claim 7, **characterized in that** the compression spring is in the form of a helical spring which is arranged coaxially with respect to the shift shaft (1) and whose outer windings bear in each case against an annular collar of the lock ring (6) and of the component (4) which is fixed with respect to the housing.

9. Shift device according to Claim 7, **characterized in that** the compression spring is in the form of a plate spring which is arranged coaxially with respect to the shift shaft (1) and whose axial outer edges bear in each case against an annular collar of the lock ring (6) and of the component (4) which is fixed with respect to the housing.

10. Shift device according to Claim 7, **characterized in that** the compression spring is in the form of an annular leaf spring which is arranged coaxially with respect to the shift shaft (1) and whose axial outer edges bear in each case against an annular collar of the lock ring (6) and of the component (4) which is fixed with respect to the housing.

11. Shift device according to one of Claims 1 to 10, **characterized in that** the torsion spring is in the form of a leg spring which is arranged coaxially with respect to the shift shaft (1) and whose legs, if angled in an axial direction, are inserted in each case into an axial bore of the lock ring (6) and of a component (4) which is fixed with respect to the housing, and if angled in a radial direction, bear in each case against a radial projection of the lock ring (6) and of the component (4) which is fixed with respect to the housing.

12. Shift device according to one of Claims 1 to 11, **characterized in that** the linear spring and the torsion spring are combined in a common spring element.

13. Shift device according to Claim 12, **characterized in that** the common spring element is in the form of a helical leg spring (15) which is arranged coaxially with respect to the shift shaft (1), whose outer windings are in each case against an annular collar of the lock ring (6) and of a component (4) which is fixed with respect to the housing, and whose legs, if angled in an axial direction, are inserted in each case into an axial bore of the lock ring (6) and of the component (4) which is fixed with respect to the housing, and if angled in a radial direction, bear in each case against a radial projection of the lock ring (6) and of the component (4) which is fixed with respect to the housing.

14. Shift device according to one of Claims 1 to 13, **characterized in that**, in a multi-stage manual gearbox having an outer shift lane (44) which lies at least two shift lanes outside a central shift lane (42) and in which the highest forward gear (G7) or the two highest forward gears (G7, G8) are situated, the selector lock (5) is provided as an upshift lock.

15. Shift device according to one of Claims 1 to 14, **characterized in that**, in a multi-stage manual gearbox having an outer shift lane (45) which lies at least two shift lanes outside the central shift lane (42) and in which only the reverse gear (R) is situated, the selector lock (5) is provided as a reverse-gear lock.

## Revendications

1. Dispositif de changement de vitesse d'une boîte de vitesses d'un véhicule automobile, qui présente au moins deux arbres de boîte de vitesses pouvant être amenés en liaison d'entraînement l'un avec l'autre de manière sélective et parallèle à l'axe par le biais de plusieurs jeux de pignons de vitesse ayant des rapports de transmission différents, avec un arbre de commutation (1), qui est disposé, en vue du transfert de rapports de sélection initiaux, de manière déplaçable axialement, et en vue du transfert de rapports de changement de vitesses initiaux, de manière supportée à rotation autour de son axe longitudinal dans un carter de boîte de vitesses, et avec un verrouillage de sélection (5) agissant par engagement positif destiné à éviter un déplacement axial de l'arbre de commutation (1) dépendant du fonctionnement dans une voie de changement de vitesses extérieure (44), **caractérisé en ce que** le verrouillage de sélection (5) comprend une bague de verrouillage (6), qui est montée de manière rotative et déplaçable axialement de manière coaxiale à l'arbre de commutation (1), laquelle bague de verrouillage présente une surface de butée (8) située axialement à l'intérieur avec au moins une dent de verrouillage (9) faisant saillie axialement sur la distance de la voie de changement de vitesses extérieure (X) ainsi qu'une surface de verrouillage (10) située axialement à l'extérieur, laquelle bague de verrouillage est maintenue dans une position de repos axiale au moyen d'un ressort linéaire, dans laquelle position de repos un déplacement axial (16) de l'arbre de commutation (1) dans la direction de la voie de changement de vitesses extérieure (44) conduit, au plus tard une fois atteinte la deuxième voie de changement de vitesses intérieure (42), à l'application d'une surface de butée (12) de l'arbre de commutation (1) contre la dent de verrouillage (9) et à partir de là, un déplacement axial supplémentaire (16) de l'arbre de commutation (1), une fois atteinte la voie de changement de vitesses intérieure suivante (43), conduit à l'application de la surface de verrouillage (10) de la bague de verrouillage (6) contre une surface de verrouillage (11) fixée au carter, et laquelle bague de verrouillage est maintenue au moyen d'un ressort de torsion dans une position de repos du côté périphérique, dans laquelle position de repos une rotation (17) de l'arbre de commutation (1), une fois atteinte une position de changement de vitesses d'au moins un rapport (G5, G6) de la voie de changement de vitesses intérieure suivante (43), conduit à un engagement axial de la dent de verrouillage (9) de la bague de verrouillage (6) dans un évidement axial (13, 14) dans la surface de butée (12) de l'arbre de commutation (1).

2. Dispositif de changement de vitesses selon la revendication 1, **caractérisé en ce que** la bague de verrouillage (6) est supportée sur palier lisse directement sur l'arbre de commutation (1).

3. Dispositif de changement de vitesses selon la revendication 1, **caractérisé en ce que** la bague de verrouillage (6) est supportée sur palier lisse directement sur l'arbre de guidage (3) dans le cas d'une réalisation de l'arbre de commutation (1) sous forme d'arbre creux monté sur un arbre de guidage (3) fixé au carter.

4. Dispositif de changement de vitesses selon la revendication 1, **caractérisé en ce que** la bague de verrouillage (6) est supportée sur palier lisse sur une douille palier (7) montée coaxialement à l'arbre de commutation (1) axialement du côté de l'extrémité au niveau d'un composant du carter (4).

5. Dispositif de changement de vitesses selon l'une quelconque des revendications 1 à 4, **caractérisé en ce que** pour les positions de changement de vitesses des deux rapports (G5, G6) de la voie de changement de vitesses intérieure suivante (43), à chaque fois au moins un évidement axial (13, 14) est prévu dans la surface de butée (12) de l'arbre de commutation (1).

6. Dispositif de changement de vitesses selon l'une quelconque des revendications 1 à 5, **caractérisé en ce que** la bague de verrouillage (6) présente, au niveau de sa surface de butée située axialement à l'intérieur (8), au moins deux dents de verrouillage (9) faisant saillie axialement et disposées diagonalement l'une en face de l'autre, et **en ce que** dans la surface de butée (12) de l'arbre de commutation (1) sont prévus, dans chaque position de changement de vitesses de déverrouillage de la voie de changement de vitesses intérieure suivante (43), à chaque fois deux évidements axiaux (13, 14) disposés diagonalement l'un en face de l'autre.

7. Dispositif de changement de vitesses selon l'une quelconque des revendications 1 à 6, **caractérisé en ce que** le ressort linéaire est réalisé sous forme de ressort de compression disposé entre la bague de verrouillage (6) et un composant fixé au carter (4).

8. Dispositif de changement de vitesses selon la revendication 7, **caractérisé en ce que** le ressort de compression est réalisé sous forme de ressort à boudin, qui est disposé coaxialement à l'arbre de commutation (1), et dont les enroulements extérieurs s'appliquent à chaque fois contre un épaulement annulaire de la bague de verrouillage (6) et du composant fixé au carter (4).

9. Dispositif de changement de vitesses selon la revendication 7, **caractérisé en ce que** le ressort de compression est réalisé sous forme de ressort Belleville, qui est disposé coaxialement à l'arbre de commutation (1), et dont les bords extérieurs axiaux s'appliquent à chaque fois contre un épaulement annulaire de la bague de verrouillage (6) et du composant fixé au carter (4).

10. Dispositif de changement de vitesses selon la revendication 7, **caractérisé en ce que** le ressort de compression est réalisé sous forme de ressort à lame annulaire, qui est disposé coaxialement à l'arbre de commutation (1), et dont les bords extérieurs axiaux s'appliquent à chaque fois contre un épaulement annulaire de la bague de verrouillage (6) et du composant fixé au carter (4).

11. Dispositif de changement de vitesses selon l'une quelconque des revendications 1 à 10, **caractérisé en ce que** le ressort de torsion est réalisé sous forme de ressort à branches, qui est disposé coaxialement à l'arbre de commutation (1), et dont les branches, dans le cas d'un coudage axial, sont insérées respectivement dans un alésage axial de la bague de verrouillage (6) ainsi que d'un composant fixé au carter (4) et dans le cas d'un coudage radial, s'appliquent à chaque fois contre une saillie radiale de la bague de verrouillage (6) et du composant fixé au carter (4).

12. Dispositif de changement de vitesses selon l'une quelconque des revendications 1 à 11, **caractérisé en ce que** le ressort linéaire et le ressort de torsion sont réunis en un élément de ressort commun.

13. Dispositif de changement de vitesses selon la revendication 12, **caractérisé en ce que** l'élément de ressort commun est réalisé sous forme de ressort à boudin à branches (15), qui est disposé coaxialement à l'arbre de commutation (1), dont les enroulements extérieurs s'appliquent à chaque fois contre un épaulement annulaire de la bague de verrouillage (6) et d'un composant fixé au carter (4), et dont les branches, dans le cas d'un coudage axial, sont insérées à chaque fois dans un alésage axial de la bague de verrouillage (6) ainsi que du composant fixé au carter (4) et, dans le cas d'un coudage radial, s'appliquent à chaque fois contre une saillie radiale de la bague de verrouillage (6) et du composant fixé au carter (4).

14. Dispositif de changement de vitesses selon l'une quelconque des revendications 1 à 13, **caractérisé en ce que** le verrouillage de sélection (5) est prévu en tant que verrouillage de passage à la vitesse supérieure dans une boîte de vitesses à plusieurs rapports comprenant une voie de changement de vitesses extérieure (44) qui présente au moins deux voies de changement de vitesses à l'extérieur d'une voie de changement de vitesses centrale (42) et qui est munie du plus haut rapport de marche avant (G7) ou des deux plus hauts rapports de marche avant (G7, G8).

15. Dispositif de changement de vitesses selon l'une quelconque des revendications 1 à 14, **caractérisé en ce que** le verrouillage de sélection (5) est prévu en tant que verrouillage de rapport de marche arrière dans une boîte de vitesse à plusieurs rapports comprenant une voie de changement de vitesses extérieure (45), qui présente au moins deux voies de changement de vitesses à l'extérieur de la voie de changement de vitesses centrale (42) et qui n'est munie que du rapport de marche arrière (R).
